# FASCICULE DE BREVET EUROPEEN

(11) **EP 3 414 108 B1**
(45) Date de publication et mention de la délivrance du brevet: **04.11.2020**
(21) Numéro de dépôt: 17704547.3
(22) Date de dépôt: 09.02.2017
(51) Int. Cl.: B44F 1/06, G04B 39/00, G04B 45/00, G04B 37/02

(54) **OBJET DÉCORATIF, EN PARTICULIER GLACE DE MONTRE, À EFFET OPTIQUE.**
DEKORATIVES OBJEKT, INSBESONDERE EIN UHRENGLAS MIT OPTISCHEM EFFEKT
DECORATIVE OBJECT, IN PARTICULAR A WATCH CRYSTAL, WITH OPTICAL EFFECT

(30) Priorité: 12.02.2016 CH 1852016
(43) Date de publication de la demande: 19.12.2018
(73) Titulaire: Cartier International AG, 6312 Steinhausen (CH)
(72) Inventeur: HUSSON, Rémi, 2000 Neuchâtel (CH); CHEVALLIER, Gabriel, 74200 Allinges (FR); MOYSE, Romain, 25500 Montlebon (FR)
(74) Mandataire: Micheli & Cie SA
(86) Numéro de dépôt international: PCT/IB2017/050703
(87) Numéro de publication internationale: WO 2017/137915

(56) Documents cités:
- EP-A2- 0 373 804
- WO-A1-2016/004540
- DE-U1- 8 701 203
- GB-A- 2 125 991
- JP-A- 2009 085 758

## Description

La présente invention concerne un objet décoratif pouvant faire office de glace de montre, et plus particulièrement un objet décoratif produisant un effet optique.

Il existe dans l'état de la technique, cf. par exemple le document DE 8701203 U1, des montres dont la glace, à travers laquelle est visible le cadran, renferme un liquide contenant des particules en suspension. Une telle glace confère un côté attrayant à la montre mais l'effet optique est assez limité. De façon analogue, le document EP 0373804 décrit un cadran de montre constitué d'une glace renfermant un liquide contenant des particules en suspension. D'autres documents, WO 2016/004540 et JP 2009-85758, décrivent des mouvements horlogers dont certains composants sont rendus invisibles par l'introduction d'un liquide dont l'indice de réfraction est sensiblement égal à celui desdits composants.

La présente invention vise à créer un effet optique particulier et propose à cette fin un objet décoratif, en particulier une glace de montre, selon la revendication 1, comprenant :
- une glace supérieure,
- une glace inférieure,
- un motif en creux formé dans la glace inférieure, en face de la glace supérieure,
- un liquide remplissant le motif en creux, l'indice de réfraction du liquide étant égal à celui de la glace inférieure ou différant de celui de la glace inférieure d'au plus 10%, de préférence d'au plus 5%, de préférence encore d'au plus 2%, et
- des éléments solides mobiles dans le liquide.

Un tel objet décoratif permet l'affichage d'un motif de manière mystérieuse, par des éléments solides mobiles tels que des billes, sans que les parois du motif en creux dans lequel circulent ces billes soient visibles.

Dans des exemples de réalisation, la glace supérieure et la glace inférieure définissent entre elles une cavité interne sur laquelle est ouvert le motif en creux.

De préférence, le liquide remplit entièrement le motif en creux et la cavité interne.

La hauteur de la cavité interne peut être suffisamment grande pour que les éléments solides puissent sortir complètement du motif en creux.

Inversement, la hauteur de la cavité interne peut être suffisamment petite pour que les éléments solides ne puissent pas sortir complètement du motif en creux.

Typiquement, le motif en creux comprend des canaux communiquant entre eux dans la glace inférieure.

Dans des exemples de réalisation, la glace inférieure est dans l'un des matériaux suivants : borosilicate, verre cristallin, silice fondue, verre crown, verre flint, quartz, céramique transparente, saphir, polyméthacrylate de méthyle, polycarbonate, polyuréthane. La glace supérieure peut aussi être dans l'un de ces matériaux.

Avantageusement, la glace supérieure est en un matériau plus dur que le matériau de la glace inférieure. Cette dureté lui confère une meilleure résistance aux rayures, ce qui est un avantage dans le cas où la glace supérieure est en contact avec l'extérieur de la montre.

Selon un exemple préféré, la glace supérieure est en saphir et la glace inférieure est en borosilicate.

D'autres caractéristiques et avantages de la présente invention apparaîtront à la lecture de la description détaillée suivante faite en référence aux dessins annexés dans lesquels :
- la figure 1 est une demi-vue en perspective d'une glace de montre selon un mode de réalisation préférentiel de l'invention ;
- les figures 2 et 3 sont des vues de dessus schématiques de la glace de montre selon le mode de réalisation préférentiel de l'invention ; à la figure 2, toutefois, l'un des constituants de la glace de montre, à savoir un liquide dans lequel se déplacent des éléments solides mobiles, est absent.

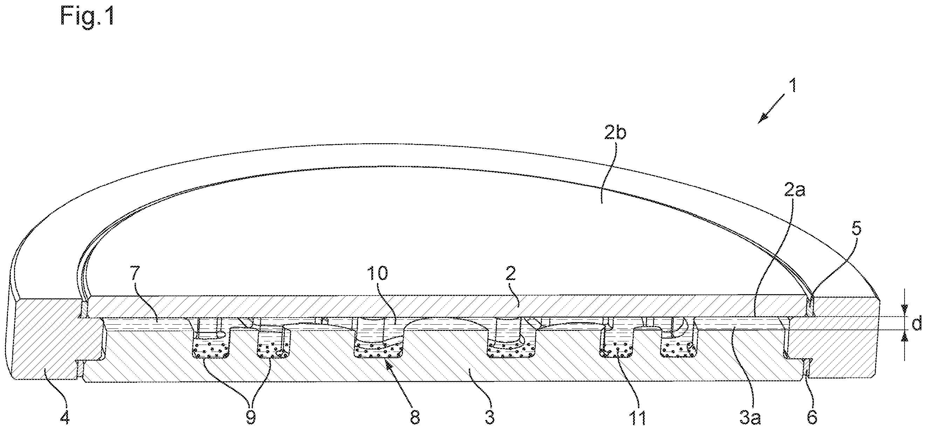

Dans le cadre de la présente invention, les termes « inférieur » et « supérieur » sont définis en référence à la position de la glace de montre telle qu'illustrée à la figure 1. Le terme « glace » s'entend de toute plaque faite en un matériau au moins partiellement transparent et de préférence entièrement transparent et sans couleur.

En référence à la figure 1, une glace de montre 1 selon un mode de réalisation préférentiel de l'invention comprend une glace supérieure 2 et une glace inférieure 3 tenues ensemble par un cadre ou bague 4, typiquement métallique. La glace de montre 1 peut constituer la glace d'une boîte de montre à travers laquelle est visible le cadran de la montre, ou une glace auxiliaire située sous une glace principale de la boîte de montre. La glace de montre 1 peut aussi, en variante, servir de fond transparent à la boîte de montre. Chacune des glaces supérieure et inférieure 2, 3 est fixée, par exemple chassée, brasée ou soudée, dans la bague 4, éventuellement avec un joint d'étanchéité 5, 6 entre la glace 2, 3 et la bague 4. La bague 4 est destinée à être fixée à une pièce de la boîte de montre telle que la carrure.

La glace supérieure 2 et la glace inférieure 3 sont espacées d'une distance d de manière à former entre elles une cavité interne 7 dont les deux parois principales sont la face inférieure 2a de la glace supérieure 2 et la face supérieure 3a de la glace inférieure 3. La face supérieure 3a de la glace inférieure 3 est gravée pour former un motif en creux 8 ouvert sur la cavité interne 7. Le motif en creux 8 est de préférence sous la forme de canaux 9 communiquant entre eux dans la glace inférieure 3. L'ensemble cavité interne 7 - motif en creux 8 forme un espace fermé, de préférence étanche. Dans l'exemple représenté, les faces principales de la glace supérieure 2 et de la glace inférieure 3 sont plates mais elles pourraient avoir une autre forme. Par exemple, la face inférieure 2a et la face supérieure 2b de la glace supérieure 2 pourraient respectivement être creuse et bombée.

La cavité interne 7 et le motif en creux 8 sont remplis, de préférence entièrement pour éviter les bulles d'air, d'un liquide 10 contenant des billes 11 ou autres éléments solides mobiles. Le liquide 10 est au moins partiellement transparent, et de préférence entièrement transparent et sans couleur. Son indice de réfraction est égal à celui de la glace inférieure 3 ou suffisamment proche de celui de la glace inférieure 3 pour que le motif 8 soit sensiblement invisible. Plus précisément, l'indice de réfraction du liquide 10 est égal à celui de la glace inférieure 3 ou diffère de (est inférieur ou supérieur à) celui de la glace inférieure 3 d'au plus 10%, de préférence d'au plus 5%, de préférence encore d'au plus 2%. L'expression « indice de réfraction » s'entend, dans le cadre de la présente invention, d'un indice de réfraction mesuré à une longueur d'onde de 700 nm, à une température de 20 à 25 °C et à pression atmosphérique. Grâce à cet indice de réfraction du liquide 10 sensiblement égal à celui de la glace inférieure 3, le motif 8 est sensiblement invisible sans qu'il soit nécessaire de polir la face supérieure 3a de la glace inférieure 3 et les parois du motif en creux 8 (qui peut avoir une géométrie complexe). En effet, le liquide 10 en contact avec la glace inférieure 3 et lesdites parois remplit les aspérités de surface.

De préférence, la glace de montre 1 comprend également un dispositif (non illustré) de compensation de la dilatation thermique du liquide 10 afin de compenser les variations de volume du liquide liées à la température. Ce dispositif peut prendre différentes formes, comme une membrane souple telle qu'exposée dans la demande de brevet WO 2015/150910.

La glace supérieure 2 et la glace inférieure 3 peuvent être faites dans le même matériau ou dans des matériaux différents. Des exemples de matériaux pouvant convenir pour les glaces 2, 3 sont les suivants : borosilicate, verre cristallin, silice fondue, verre crown, verre flint, quartz, céramique transparente (en particulier Zerodur® ou spinelle), saphir, polyméthacrylate de méthyle (PMMA), polycarbonate, polyuréthane. Dans un exemple de réalisation particulier, la glace inférieure 3 est en borosilicate, matériau se prêtant bien à la gravure et ayant un indice de réfraction de 1,47, et la glace supérieure 2 est en saphir (indice de réfraction : 1,76), matériau plus adapté pour une partie externe d'une boîte de montre car dur et résistant aux rayures. Dans ce cas, le liquide 10 a un indice de réfraction qui est approximativement de 1,47. Dans la présente invention, le liquide 10 est par exemple de la glycérine ou une huile minérale, de préférence une huile minérale.

Les billes 11 sont par exemple en or. Elles sont en suspension dans le liquide 10 lorsque celui-ci est agité. Elles peuvent se déposer dans le motif 8 et se mouvoir selon l'orientation de la montre sous l'effet de la force gravitationnelle. Les billes 11 peuvent notamment se mouvoir dans les canaux 9 et passer d'un canal 9 à l'autre à l'intérieur de la glace inférieure 3. Dans un exemple de réalisation, la distance d séparant les glaces supérieure et inférieure 2, 3, correspondant à la hauteur de la cavité interne 7, est plus grande que le diamètre des billes 11 de sorte que les billes 11 peuvent aussi circuler librement dans la cavité interne 7 entre les glaces supérieure et inférieure 2, 3. Dans un autre exemple de réalisation, la distance ou hauteur d est inférieure au diamètre des billes 11 de sorte que celles-ci ne peuvent pas pénétrer entièrement dans la cavité interne 7 et restent donc dans le motif 8 et ses canaux 9.

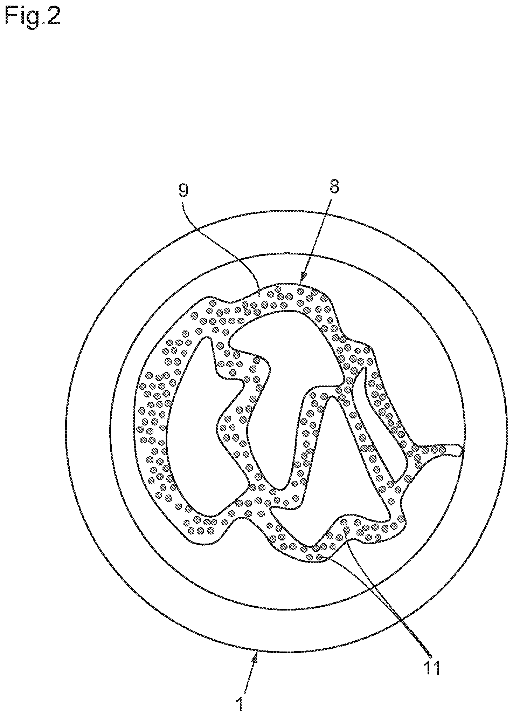

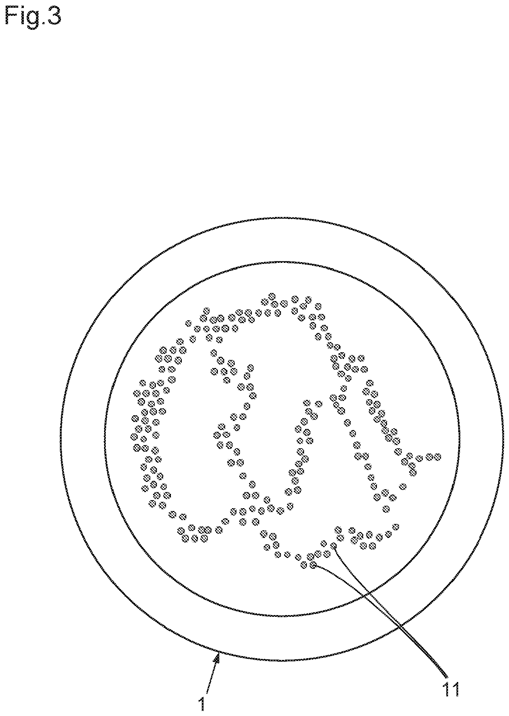

La présente invention produit ainsi un effet optique mystérieux puisque l'on ne voit que le motif tel que dessiné par les billes 11, les canaux 9 ou plus généralement les parois du motif 8 n'étant pas visibles. A titre d'illustration, la figure 2 montre la glace de montre 1 avec les billes 11 mais sans le liquide 10. Les canaux 9 du motif 8 y sont visibles. A la figure 3 est représentée la glace de montre 1 avec les billes 11 et le liquide 10. Les canaux 9 du motif 8 y sont invisibles. Le motif 8 peut avoir toute forme souhaitée.

Selon des exemples particuliers de réalisation :
- les billes 11 ont un diamètre minimum de 0,1 mm, par exemple d'environ 0,5 mm ; les billes 11 ne doivent pas être trop petites, pour ne pas ralentir l'animation, et ne doivent pas non plus être trop grosses, pour ne pas augmenter l'encombrement de la glace de montre 1 ;
- dans le cas d'une distance d entre les glaces supérieure et inférieure 2, 3 suffisante pour permettre aux billes 11 de circuler librement dans la cavité interne 7, ladite distance d est d'au moins 0,2 mm plus le diamètre des billes 11, soit par exemple 0,75 mm, ce jeu permettant une circulation plus aisée des billes 11 ;
- dans le cas d'une distance d entre les glaces supérieure et inférieure 2, 3 insuffisante pour permettre aux billes 11 de circuler dans la cavité interne 7, ladite distance d est d'au plus le diamètre des billes 11 moins 0,2 mm, soit par exemple 0,3 mm ; en effet, une distance d trop proche du diamètre des billes 11 augmenterait le risque de coincement des billes 11 entre les glaces 2, 3 ;
- la hauteur du motif 8 et de ses canaux 9 est d'au moins 0,2 mm plus le diamètre des billes 11, soit par exemple 0,75 mm ;
- la largeur des canaux 9 est d'au moins 0,2 mm plus le diamètre des billes 11, et varie par exemple entre 1,3 et 2,5 mm ;
- la verticalité des parois des canaux 9 est d'au moins 60° et de préférence de 90°, c'est-à-dire maximale ; dans le cas où les billes 11 peuvent circuler dans la cavité interne 7, la verticalité des parois des canaux 9 contrôle l'angle de sortie des billes 11 ; la verticalité doit toutefois être suffisamment importante pour permettre aux billes 11 de représenter le motif souhaité de manière précise ; de préférence, les parois ont des chanfreins (non visibles sur les dessins) à la sortie des canaux 9, par exemple orientés à 45° et d'une hauteur de 0,1 à 0,2 mm.

La glace de montre 1 selon le mode de réalisation préférentiel de l'invention peut être assemblée de la manière suivante :
1) fixation de la glace inférieure 3 dans la bague 4,
2) dépôt des billes 11 sur la face supérieure, gravée, 3a de la glace inférieure 3 et notamment dans le motif 8,
3) fixation de la glace supérieure 2 dans la bague 4,
4) remplissage de la cavité interne 7 et du motif 8 par injection ou aspiration du liquide 10 à travers un trou radial (non représenté) traversant la bague 4 et faisant communiquer la cavité interne 7 avec l'extérieur,
5) fermeture du trou radial par une vis d'étanchéité ou autre forme de bouchon,
6) nettoyage à l'eau savonneuse de l'ensemble pour éliminer les traces de liquide résiduelles.

Si la distance d entre les glaces supérieure et inférieure 2, 3 est suffisamment grande, les billes 11 peuvent être introduites dans la cavité interne 7 par le trou radial précité avec le liquide 10 au lieu d'être déposées sur la face supérieure 3a de la glace inférieure 3 comme indiqué au point 2).

Comme décrit ci-dessus, la glace de montre 1 selon l'invention comprend de préférence la cavité interne 7 pour faciliter le remplissage du motif 8 et de ses canaux 9. Toutefois, on peut aussi envisager de supprimer cette cavité interne 7, c'est-à-dire de rendre la distance d nulle. Du fait que les canaux 9 communiquent entre eux, le remplissage du motif 8 pourrait être effectué via un trou de remplissage faisant communiquer l'un des canaux 9 avec l'extérieur. On peut aussi remplir le motif 8 depuis la face supérieure 3a de la glace inférieure 3 avant le montage de la glace supérieure 2.

Par ailleurs, dans des variantes de l'invention, les glaces supérieure et inférieure 2, 3 pourraient être reliées de manière monolithique. En d'autres termes, la glace de montre selon l'invention pourrait être en une seule pièce, la glace supérieure étant constituée par une partie supérieure de la pièce et la glace inférieure étant constituée par une partie inférieure de la pièce. Dans ce cas, la glace de montre pourrait être chassée dans une lunette ou carrure-lunette de la boîte de montre. Un exemple de technique permettant la réalisation d'une telle glace de montre monolithique consiste à modifier la densité d'une zone interne d'un matériau transparent au moyen d'un laser femtoseconde puis à enlever la zone affectée en immergeant le matériau dans une solution de gravure. Le laser ne modifie la densité du matériau qu'au point focal du faisceau laser si bien qu'il est possible de creuser ou graver une zone interne du matériau de manière très précise.

Enfin, il apparaîtra clairement à l'homme du métier que la présente invention pourrait s'appliquer à d'autres objets qu'une glace de montre et que l'objet illustré aux figures pourrait constituer par exemple un bijou ou une partie de bijou.

## Revendications

1. Objet décoratif (1) comprenant :
- une glace supérieure (2),
- une glace inférieure (3),
- un motif en creux (8) formé dans la glace inférieure (3), en face de la glace supérieure (2),
- un liquide (10) remplissant le motif en creux (8), et
- des éléments solides (11) mobiles inclus dans le liquide (10), **caractérisé en ce que** l'indice de réfraction du liquide (10) est égal à celui de la glace inférieure (3) ou diffère de celui de la glace inférieure (3) d'au plus 10%.

2. Objet décoratif selon la revendication 1, dans lequel l'indice de réfraction du liquide (10) est égal à celui de la glace inférieure (3) ou diffère de celui de la glace inférieure (3) d'au plus 5%.

3. Objet décoratif selon la revendication 2, dans lequel l'indice de réfraction du liquide (10) est égal à celui de la glace inférieure (3) ou diffère de celui de la glace inférieure (3) d'au plus 2%.

4. Objet décoratif selon l'une des revendications 1 à 3, dans lequel la glace supérieure (2) et la glace inférieure (3) définissent entre elles une cavité interne (7), le motif en creux (8) étant arrangé de façon à être ouvert sur ladite cavité interne (7).

5. Objet décoratif selon la revendication 4, dans lequel le liquide (10) est adapté à remplir entièrement le motif en creux (8) et la cavité interne (7).

6. Objet décoratif selon la revendication 4 ou 5, dans lequel la hauteur (d) de la cavité interne (7) est suffisamment grande pour que les éléments solides (11) puissent sortir complètement du motif en creux (8).

7. Objet décoratif selon la revendication 4 ou 5, dans lequel la hauteur (d) de la cavité interne (7) est suffisamment petite pour que les éléments solides (11) ne puissent pas sortir complètement du motif en creux (8).

8. Objet décoratif selon l'une des revendications 1 à 7, dans lequel le motif en creux (8) comprend des canaux (9) communiquant entre eux dans la glace inférieure (3).

9. Objet décoratif selon l'une des revendications 1 à 8, dans lequel les éléments solides (11) sont des billes.

10. Objet décoratif selon l'une des revendications 1 à 9, dans lequel la glace supérieure (2) est en un matériau plus dur que le matériau de la glace inférieure (3).

11. Objet décoratif selon l'une des revendications 1 à 10, dans lequel la glace supérieure (2) est en saphir et la glace inférieure (3) est en borosilicate.

12. Objet décoratif selon l'une des revendications 1 à 10, dans lequel la glace inférieure (3) est dans l'un des matériaux suivants : borosilicate, verre cristallin, silice fondue, verre crown, verre flint, quartz, céramique transparente, saphir, polyméthacrylate de méthyle, polycarbonate, polyuréthane.

13. Objet décoratif selon l'une des revendications 1 à 10 et 12, dans lequel la glace supérieure (2) est dans l'un des matériaux suivants : borosilicate, verre cristallin, silice fondue, verre crown, verre flint, quartz, céramique transparente, saphir, polyméthacrylate de méthyle, polycarbonate, polyuréthane.

14. Objet décoratif selon l'une des revendications 1 à 13, consistant en une glace de montre.

## Patentansprüche

1. Dekoratives Objekt (1), das umfasst:
- ein oberes Glas (2),
- ein unteres Glas (3),
- ein vertieftes Motiv (8), das in dem unteren Glas (3) gegenüber dem oberen Glas (2) gebildet ist,
- eine Flüssigkeit (10), die das vertiefte Motiv (8) füllt, und
- bewegliche feste Elemente (11), die in der Flüssigkeit (10) enthalten sind,
**dadurch gekennzeichnet, dass** der Brechungsindex der Flüssigkeit (10) gleich demjenigen des unteren Glases (3) ist oder sich um höchstens 10 % von demjenigen des unteren Glases (3) unterscheidet.

2. Dekoratives Objekt nach Anspruch 1, wobei der Brechungsindex der Flüssigkeit (10) gleich demjenigen des unteren Glases (3) ist oder sich um höchstens 5 % von demjenigen des unteren Glases (3) unterscheidet.

3. Dekoratives Objekt nach Anspruch 2, wobei der Brechungsindex der Flüssigkeit (10) gleich demjenigen des unteren Glases (3) ist oder sich um höchstens 2 % von demjenigen des unteren Glases (3) unterscheidet.

4. Dekoratives Objekt nach einem der Ansprüche 1 bis 3, wobei das obere Glas (2) und das untere Glas (3) zwischen einander einen inneren Hohlraum (7) definieren, wobei das vertiefte Motiv (8) derart angeordnet ist, dass es zum inneren Hohlraum (7) offen ist.

5. Dekoratives Objekt nach Anspruch 4, wobei die Flüssigkeit (10) angepasst ist, um das vertiefte Motiv (8) und den inneren Hohlraum (7) vollständig zu füllen.

6. Dekoratives Objekt nach Anspruch 4 oder 5, wobei die Höhe (d) des inneren Hohlraums (7) groß genug ist, damit die festen Elemente (11) vollständig aus dem vertieften Motiv (8) austreten können.

7. Dekoratives Objekt nach Anspruch 4 oder 5, wobei die Höhe (d) des inneren Hohlraums (7) klein genug ist, damit die festen Elemente (11) nicht vollständig aus dem vertieften Motiv (8) austreten können.

8. Dekoratives Objekt nach einem der Ansprüche 1 bis 7, wobei das vertiefte Element (8) Kanäle (9) umfasst, die untereinander in dem unteren Glas (3) verbunden sind.

9. Dekoratives Objekt nach einem der Ansprüche 1 bis 8, wobei die festen Elemente (11) Kugeln sind.

10. Dekoratives Objekt nach einem der Ansprüche 1 bis 9, wobei das obere Glas (2) aus einem härteren Material als das Material des unteren Glases (3) ist.

11. Dekoratives Objekt nach einem der Ansprüche 1 bis 10, wobei das obere Glas (2) aus Saphir ist und das untere Glas (3) aus Borsilikat ist.

12. Dekoratives Objekt nach einem der Ansprüche 1 bis 10, wobei das untere Glas (3) aus einem der folgenden Materialien ist: Borsilikat, Kristallglas, geschmolzene Kieselerde, Kronglas, Flintglas, Quarz, transparente Keramik, Saphir, Methylpolymethacrylat, Polycarbonat, Polyurethan.

13. Dekoratives Objekt nach einem der Ansprüche 1 bis 10 und 12, wobei das obere Glas (2) aus einem der folgenden Materialien ist: Borsilikat, Kristallglas, geschmolzene Kieselerde, Kronglas, Flintglas, Quarz, transparente Keramik, Saphir, Methylpolymethacrylat, Polycarbonat, Polyurethan.

14. Dekoratives Objekt nach einem der Ansprüche 1 bis 13, das aus einem Uhrenglas besteht.

## Claims

1. Decorative object (1) comprising:
- an upper glass (2),
- a lower glass (3),
- a recessed pattern (8) formed in the lower glass (3) and facing the upper glass (2),
- a liquid (10) filling the recessed pattern (8), and
- mobile solid elements (11) which are included in the liquid (10), **characterised in that** the refractive index of the liquid (10) is equal to that of the lower glass (3) or differs from that of the lower glass (3) by at most 10%.

2. Decorative object as claimed in claim 1, wherein the refractive index of the liquid (10) is equal to that of the lower glass (3) or differs from that of the lower glass (3) by at most 5%.

3. Decorative object as claimed in claim 2, wherein the refractive index of the liquid (10) is equal to that of the lower glass (3) or differs from that of the lower glass (3) by at most 2%.

4. Decorative object as claimed in any one of claims 1 to 3, wherein the upper glass (2) and the lower glass (3) define between them an internal cavity (7), the recessed pattern (8) being arranged to be open to said internal cavity (7).

5. Decorative object as claimed in claim 4, wherein the liquid (10) is adapted to fill the recessed pattern (8) and the internal cavity (7) completely.

6. Decorative object as claimed in claim 4 or 5, wherein the internal cavity (7) has a height (d) sufficient for the solid elements (11) to be able to completely exit the recessed pattern (8).

7. Decorative object as claimed in claim 4 or 5, wherein the internal cavity (7) has a height (d) not sufficient to allow the solid elements (11) to completely exit the recessed pattern (8).

8. Decorative object as claimed in any one of claims 1 to 7, wherein the recessed pattern (8) comprises channels (9) which mutually communicate in the lower glass (3).

9. Decorative object as claimed in any one of claims 1 to 8, wherein the solid elements (11) are balls.

10. Decorative object as claimed in any one of claims 1 to 9, wherein the upper glass (2) is formed of a harder material than the material of the lower glass (3).

11. Decorative object as claimed in any one of claims 1 to 10, wherein the upper glass (2) is formed of sapphire and the lower glass (3) is formed of borosilicate.

12. Decorative object as claimed in any one of claims 1 to 10, wherein the lower glass (3) is formed of one of the following materials: borosilicate, crystalline glass, fused silica, crown glass, flint glass, quartz, transparent ceramic, sapphire, polymethyl methacrylate, polycarbonate, polyurethane.

13. Decorative object as claimed in any one of claims 1 to 10 and 12, wherein the upper glass (2) is formed of one of the following materials: borosilicate, crystalline glass, fused silica, crown glass, flint glass, quartz, transparent ceramic, sapphire, polymethyl methacrylate, polycarbonate, polyurethane.

14. Decorative object as claimed in any one of claims 1 to 13, consisting of a watch glass.
